# EUROPÄISCHE PATENTSCHRIFT

(11) **EP 1 286 927 B1**
(45) Veröffentlichungstag und Bekanntmachung des Hinweises auf die Patenterteilung: **01.09.2004**
(21) Anmeldenummer: 01940472.2
(22) Anmeldetag: 14.05.2001
(51) Int. Cl.: C03C 17/00, C03C 17/34, C03C 17/32

(54) **GLASBAUTEILE MIT EINER ABLEITFÄHIGEN BESCHICHTUNG, IHRE VERWENDUNG UND DARAUS HERGESTELLTE APPARATE, ANLAGEN UND ROHRLEITUNGEN**
GLASS ELEMENTS WITH A CONDUCTIVE COATING, THE USE THEREOF, AS WELL AS DEVICES, INSTALLATIONS AND PIPE CONDUITS PRODUCED THEREFROM
COMPOSANTS EN VERRE POURVUS D'UN REVETEMENT A DISSIPATIONS ELECTRIQUE, LEUR UTILISATION, ET APPAREILS, INSTALLATIONS ET CONDUITES TUBULAIRES CONSTITUES DE CES COMPOSANTS

(30) Priorität: 19.05.2000 DE 10024738
(43) Veröffentlichungstag der Anmeldung: 05.03.2003
(73) Patentinhaber: QVF Engineering GmbH, 55122 Mainz (DE)
(72) Erfinder: WINTER, Karl-Heinz, 65193 Wiesbaden (DE); GERTH, Klaus, 55270 Klein-Winternheim (DE)
(74) Vertreter: Andrae, Steffen, Dr.
(86) Internationale Anmeldenummer: PCT/EP2001/005465
(87) Internationale Veröffentlichungsnummer: WO 2001/090011

(56) Entgegenhaltungen:
- EP-A- 0 339 340
- EP-A- 0 999 242
- WO-A-98/25274
- DE-A- 4 229 192
- PRONIN A V ET AL: "GLASS PIPES WITH A PROTECTIVE ANTISTATIC COATING" GLASS CERAM SEP-OCT 1985, Bd. 42, Nr. 9-10, September 1985 (1985-09), Seiten 392-394, XP001018781

## Beschreibung

Die vorliegende Erfindung betrifft Glasbauteile für den Apparate- und Anlagenbau und den Rohrleitungsbau, ihre Verwendung sowie die aus ihnen durch Zusammenbau hergestellten Apparaturen, Anlagen und Rohrleitungen.

Es ist bekannt, Apparaturen, Anlagen und Rohrleitungen beispielsweise für die chemische Industrie, die pharmazeutische Industrie oder Lebensmittelindustrie, aus Bauteilen aus Glas herzustellen. Die Glasbauteile werden aus für den jeweiligen Verwendungszweck geeigneten Gläsern, insbesondere Borsilikatglas, hergestellt. Zu den Anforderungen an die Glasbauteile bzw. die aus ihnen hergestellten Apparaturen, Anlagen und Rohrleitungen gehören in erster Linie die erforderliche chemische Beständigkeit gegen die verarbeiteten oder transportierten Substanzen bei den vorgesehenen Betriebstemperaturen sowie die erforderlichen mechanischen Eigenschaften, zu denen neben der erforderlichen Festigkeit bei den auftretenden Temperaturen und Drucken auch die Unversehrtheit der Glasoberfläche in der vorgesehenen Umgebung gezählt werden kann. Um einen Schutz der Glasoberfläche von Glasbauteilen beispielsweise aus Borsilikatglas gegen Beschädigungen von außen, z.B. Kratzer oder Schläge, zu gewährleisten, ist es im Apparate- und Anlagenbau üblich, die Glasoberfläche durch Überzüge oder Ummantelungen zu schützen. Ein üblicher Schutzüberzug ist eine transparente Beschichtung auf Polyurethanbasis, die unter der Handelsbezeichnung Sectrans bekannt ist. Derartige Sectrans-Überzüge werden durch Aufspritzen in definierten Schichten auf die Glasoberfläche aufgebracht. Ihre Dauereinsatztemperatur beträgt 140°C, wobei kurzfristig Temperaturen bis 180°C zugelassen werden. Eine Sectrans-Beschichtung schützt nicht nur die Glasoberfläche gegen Kratzer und Anschläge, sondern gewährleistet bei einem trotzdem auftretenden Glasbruch Splitterschutz. Die Beschichtung kann bei drucklosem Betrieb auch einen gewissen Schutz gegen den Austritt von Medien aus den gebrochenen Glasapparaturen gewährleisten.

Eine andere Möglichkeit, Oberflächen von Glasbauteilen und -anlagen zu schützen, besteht in einer Ummantelung der Glasbauteile mit Glasfasermatten, die auf das Glasteil aufgebracht und anschließend mit Polyesterharz getränkt werden ("GFP-Ummantelung"). Derartige Ummantelungen sind in der Regel ausreichend transparent, obwohl sie nicht die Transparenz der obigen Sectrans-Beschichtungen erreichen. Die maximale Betriebstemperatur GFP-ummantelter Glasbauteile beträgt 150°C.

Die genannten Überzüge und Ummantelungen verbessern zwar die mechanischen Eigenschaften. Da sie jedoch aus elektrisch nicht ableitfähigen Materialien mit elektrischen Oberflächenwiderständen von typischerweise über 10¹² Ω bestehen, sind sie gegenüber unbeschichtetem Glas stärker elektrostatisch aufladbar. Unbeschichtetes Glas bildet normalerweise an seiner Oberfläche eine Wasserhaut und hat dadurch normalerweise einen signifikant verminderten elektrischen Oberflächenwiderstand, so daß nach den Richtlinien "Statische Elektrizität" Nr. ZH1/200 der BG-Chemie normalerweise keine besonderen Schutzmaßnahmen gegen elektrostatische Aufladungen erforderlich sind. Bei mit der Atmosphäre in Kontakt stehenden Glasoberflächen bleibt der spezifische elektrische Oberflächenwiderstand auch bei normaler Luftfeuchte mit maximal 10⁸ Ω in einem unkritischen Bereich.

Durch lokale oder ausgedehnte elektrostatische Aufladungen von nicht ableitfähigen, z.B. nicht ableitfähig beschichteten, Bauteilen und daraus hergestellten Rohrleitungen und Anlagen kann es bei bestimmten chemischen Verfahren dazu kommen, daß Funken- oder Büschelentladungen auftreten, die zum Zünden des Stoffgemischs führen. Die oben genannten Glasbauteile und -anlagen mit Ummantelung oder Polyurethanbeschichtung müssen daher beim Einsatz zündfähiger Stoffgemische durch besondere Ableitmaßnahmen gegen unzulässige eletrostatische Aufladung gesichert werden.

Auch Anlagen aus unbehandeltem Glas können dann ggf. ein Gefährdungspotential durch Aufladung darstellen, wenn nämlich die Glasoberflächen nicht mit feuchter Umgebungsluft in Kontakt sind, sondern mit nicht-wässrigen und/oder wasserbindenden Medien wie z.B. Benzol oder Toluol, so daß die schützende ableitfähige Wasserhaut fehlt.

Es ist Aufgabe der vorliegenden Erfindung, die Sicherheit von Glasbauteilen und daraus hergestellten Apparaturen, Anlagen und Rohrleitungen im Hinblick auf ihre elektrostatische Aufladbarkeit zu gewährleisten, ohne daß die bisher erforderlichen zusätzlichen Schutzmaßnahmen getroffen werden müssen.

Diese Aufgabe wird durch Glasbauteile gemäß den Ansprüchen 1-4, deren Verwendung gemäß den Ansprüchen 5 und 6 bzw. die daraus hergestellten Apparate, Anlagen und Rohrleitungen gemäß den Ansprüchen 7 und 8 gelöst.

Wesentlichstes Merkmale der Glasbauteile der vorliegenden Erfindung ist es, daß ihre Oberflächen ganz oder teilweise mit einem äußeren Überzug zur Verminderung des Oberflächenwiderstands beschichtet sind.

"Oberflächen" bedeutet dabei ohne Einschränkungen beliebige Oberflächen des Glasbauteils und umfaßt äußere Oberflächen, die mit der Umgebungsluft in Kontakt stehen, sowie auch z.B. im Anlagen- oder Rohrleitungsinneren liegende Oberflächen. Daß diese Oberflächen "ganz oder teilweise" mit einem Überzug zur Verminderung des Oberflächenwiderstands beschichtet sind, bedeutet, daß z.B. auch nur die Innenoberflächen oder nur die Außenoberflächen beschichtet sein können und/oder daß die Oberflächenbeschichtungen beispielsweise nicht als geschlossene Überzüge vorliegen müssen, sondern beispielsweise auch als aufgedruckte Liniennetze oder nur in besonders aufladungsgefährdeten Anlagenabschnitten vorliegen können.

Es versteht sich, daß bei Überzügen, die auf Innenoberflächen aufgebracht sind, die erforderliche chemische Beständigkeit der Überzüge gegen die jeweiligen Medien gewährleistet sein muß. Ansonsten gibt es bei Innenbeschichtungen keine zusätzlichen Besonderheiten, so daß die nachfolgende Beschreibung von Ausführungsformen der Erfindung anhand von Glasbauteilen bzw. daraus hergestellten Apparaturen, Anlagen und Rohrleitungen erfolgt, bei denen der Überzug auf die Außenoberflächen aufgebracht ist.

Die aufgebrachten Überzüge sollen den Oberflächenwiderstand des jeweilige Glasbauteils wenigstens auf den normalen spezifischen elektrischen Oberflächenwiderstand von unbeschichtetem Glas absenken, das heißt auf eine Größenordnung von 10⁸ Ω oder weniger. Vorzugsweise wird ein Beschichtungsmaterial verwendet, das die Transparenz des überzogenen Glases nicht oder nicht wesentlich beeinträchtigt.

Die genannten Anforderungen lassen sich mit Überzügen aus transparenten ableitfähigen organischen Polymeren erfüllen. Derartige Überzüge aus ableitfähigen organischen Polymeren lassen sich auf verschiedene Weise herstellen, z.B. durch Aufstreichen oder, vorzugsweise, durch Aufspritzen. Die geeigneten ableitfähigen Polymeren liegen für das Aufbringen des Überzugs in einem Lösemittel gelöst oder in einem flüssigen Träger dispergiert vor.

Ein besonders geeignetes und derzeit bevorzugtes ableitfähiges Polymer ist ein Polyethylendioxythiophen/Polystyrolsulfonat (PEDT/PSS)-Polymer, das unter der Handelsbezeichnung Baytron P von der Bayer AG erhältlich ist und für die Beschichtung von Glas- und Kunststoffen angeboten wird. Es führt zu ableitfähigen, transparenten und nahezu farblosen Beschichtungen. Es wird derzeit vorzugsweise zur Beschichtung von Kunststofffolien oder Bildröhren verwendet. Das Aufbringen einer das genannte Polymere enthaltenden wäßrigen Dispersion kann außer durch Aufspritzen und Aufstreichen auch durch Spin-coaten, Druckverfahren und Walzenauftragstechniken erfolgen. Zur Verbesserung der Haftfähigkeit können die Beschichtungen je nach Untergrund geeignete haftverbessernde Zusätze enthalten, z.B. die, die den Produktinformationen der Bayer AG zum Produkt Baytron P entnehmbar sind.

Eine Beschichtung mit dem ableitfähigen PEDT/PSS-Polymer kann auf Glasbauteilen bis zu einer maximalen Temperaturbelastung von 140°C eingesetzt werden.

Andere ableitfähige Polymere, die anstelle der genannten PEDT/PPS-Polymere für eine Verwendung in Frage kommen, sind beispielsweise Polyanilin oder Polypyrrol, die jedoch z.B. im Hinblick auf die Transparenz der gebildeten Überzüge schlechtere Ergebnisse liefern.

Werden die erfindungsgemäßen Glasbauteile mit dem ableitfähigen Überzug zu Anlagen, Apparaturen und Rohrleitungen zusammengebaut, wird vorzugsweise so gearbeitet, daß dafür gesorgt wird, daß an den Verbindungsstellen einzelner Glasbauteile eine elektrische Überbrückung der Verbindungsstellen erfolgt. Damit wird sicher gestellt, daß die durch die Beschichtung ableitfähig gemachten Oberflächen der Glasbauteile sich im wesentlichen über die ganze Apparatur, Anlage oder Rohrleitung erstrecken können.

Nachfolgend wird die Erfindung unter Bezugnahme auf fünf Figuren noch näher erläutert.

Es zeigen:
- Fig. 1: eine schematische Darstellung eines Glasbauteils mit zwei Sicherheitsplanflanschen und Beschichtungen;
- Fig. 2: eine Ausführungsform einer elektrisch ableitfähigen Verbindung von zwei Glasbauteilen mit Sicherheitsplanflansch gemäß Fig. 1 unter Verwendung einer Spezialdichtung;
- Fig. 3: eine modifizierte Ausführungsform für eine Verbindung gemäß Fig. 2;
- Fig. 4: eine weitere modifizierte Ausführungsform einer ableitfähigen Verbindung gemäß Fig. 2; und
- Fig. 5: eine Ausführungsform einer elektrisch ableitfähigen Verbindung von zwei Glasbauteilen mit Bördelflansch.

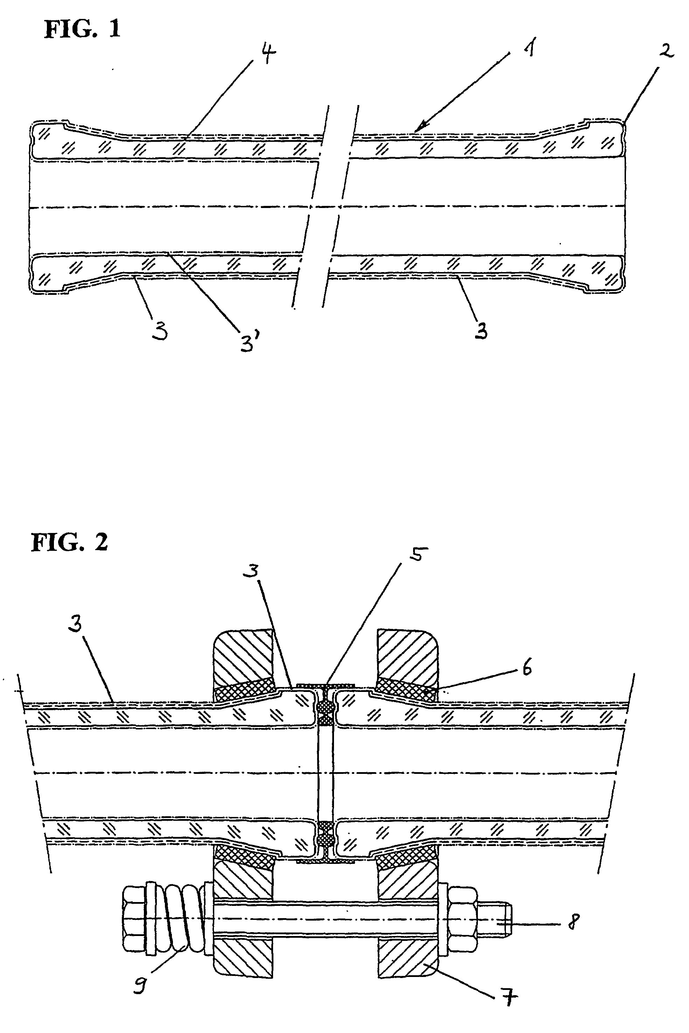

In Figur 1 ist schematisch ein Glasbauteil in Form eines Glasrohrs gezeigt, das an seinen Enden mit Sicherheitsplanflanschen 2 versehen ist, die als Beispiel für irgendeine der auf dem vorliegenden Fachgebiet bekannten Flanschformen gezeigt sind. Andere bekannte Flanschformen sind z.B. Bördelflansche, Schliffe, Kugel/Pfanne und andere. Das Glasbauteil weist einen ersten Schutzüberzug 4 aus einem nicht leitenden Überzugsmaterial, beispielsweise Polyurethan (Sectrans) auf, der erfindungsgemäß mit einem weiteren Überzug 3, z.B. aus PEDT/PSS, beschichtet ist. In der Figur ist ferner mit 3' auch ein ableitfähiger Überzug gezeigt, der auf der Innenseite des Glasbauteils aufgebracht ist. Beim Aufbringen des ableitfähigen Überzugs wird vorzugsweise so gearbeitet, daß durch Aufspritzen eine definierte geeignete Schichtdicke von beipielsweise 3 bis 15 µm, vorzugsweise etwa 6 µm; erreicht wird. Bei einer derartigen Beschichtung bleibt die Transparenz des Glases erhalten.

Im gezeigten Falle wird die elektrisch ableitfähige Beschichtung 3 über die komplette, mit dem Schutzüberzug vorbeschichtete Oberfläche des Glasbauteils aufgebracht. Die Beschichtung ist zwischen den Flanschenden durchgängig und ermöglicht ein Überbrücken des Flanschendes z.B. auf eine Weise, wie nachfolgend anhand der Figuren 2 bis 5 noch näher erläutert wird.

Durch den aufgebrachten Überzug kann der Oberflächenwiderstand eines vorbeschichteten Glasbauteils auf eine Größenordnung von 10⁷ Ω abgesenkt werden. In der nachfolgenden Tabelle 1 ist dieser Wert dem für völlig unbeschichtetes Glas und Glas nur mit Schutzbeschichtung gegenübergestellt.

| | Oberflächenwiderstand [Ω] |
|---|---|
| Glas unbeschichtet, T=20°C, normale Luftfeuchte | 10⁸ Ω |
| Glas beschichtet | 10¹³ Ω |
| Glas beschichtet + ableitfähige Beschichtung | 10⁷ Ω |

Werden Glasbauteile zu Apparaturen, Anlagen oder Rohrleitungen zusammengefügt, kommen bekannte Verbindungselemente wie Flanschringe mit Druckfedern, Schrauben und Dichtungen zur Anwendung. Die Figuren 2 bis 5 zeigen, wie unter Verwendung derartiger Teile ableitfähige Verbindungen realisierbar sind.

Bezug nehmend auf die Figuren 2 bis 4 wird eine ableitfähige Verbindung zwischen zwei Glasbauteilen mit Sicherheitsplanflansch wenigstens teilweise dadurch gewährleistet, daß man eine Dichtung 5 bzw. 5' verwendet, die aus einem elektrostatisch ableitfähigen Material, beispielsweise PTFE-Graphit, besteht. Zur Verbesserung des Kontakts der Dichtung 5 mit der ableitfähig beschichteten Oberfläche des Glasbauteils ist die Dichtung 5 gemäß Fig. 2 speziell gestaltet. Ihr äußerer Kragen ist so dimensioniert, daß er fest auf der ableitfähigen Beschichtung 3 der beiden Glasbauteile aufliegt. Ein weiterer elektrischer Kontakt wird durch die Dichtfläche selbst hergestellt, indem die beiden Glasoberflächen durch die von der Druckfeder 9 erzeugten Kraft aufeinander gepreßt werden.

Zur Verbesserung der Ableitfähigkeit der hergestellten Verbindung weist in den Ausführungsformen der Fig. 2 bis 4 der verwendete metallische Flanschring 7 eine elektrisch ableitfähige Einlage 6 auf. Dadurch werden die beiden Glasbauteile einerseits durch die Dichtung 5 bzw. 5' sowie zusätzlich durch die mit einer Metallschraube 8 miteinander verbundenen Flanschringe mit den Einsätzen 6 ableitfähig verbunden. Die Einlagen werden dabei durch die Federkraft auf die ableitfähigen Beschichtungen 3 gepreßt, wodurch der Kontakt hergestellt wird. Die Reaktionskraft wird über die Einlagen 6 in den Flanschring 7 geleitet, und durch die Verschraubung mit einer ableitfähigen Metallschraube 8 wird eine Brücke zum gegenüber liegenden Flanschring 7 gebildet.

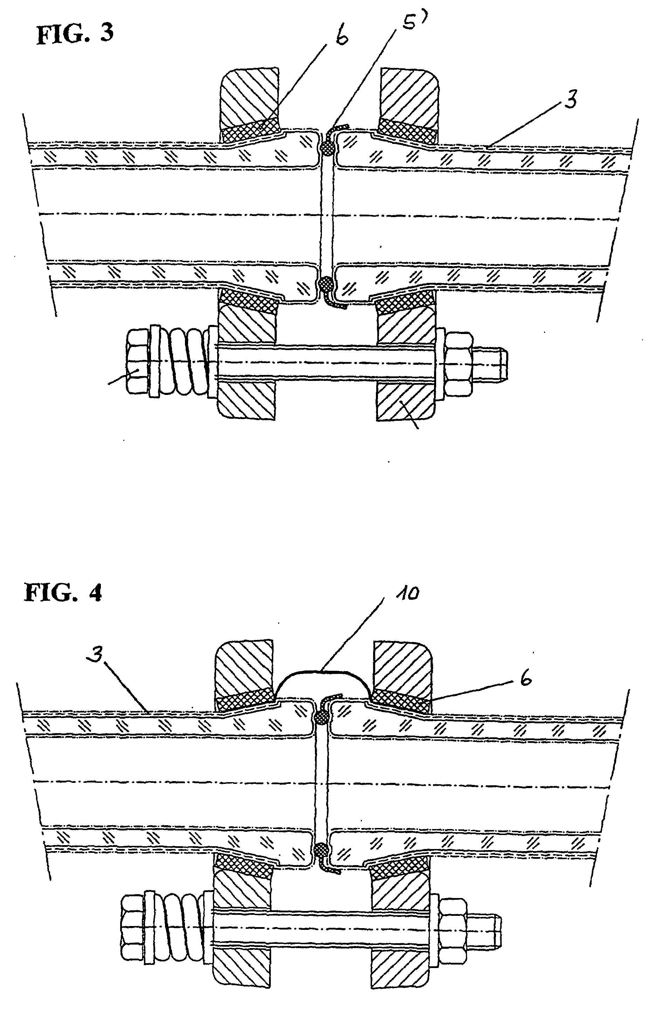

Figur 4 zeigt eine weitere Abwandlung, bei der außer den in Figur 3 gezeigten Elementen zur weiteren Überbrückung noch zusätzlich ein elektrisch ableitfähiges Band 10 vorgesehen ist, das über den Sicherheitsplanflansch geführt wird und mit beiden Enden unter den Einlagen 6 der Flanschringe 7 liegt.

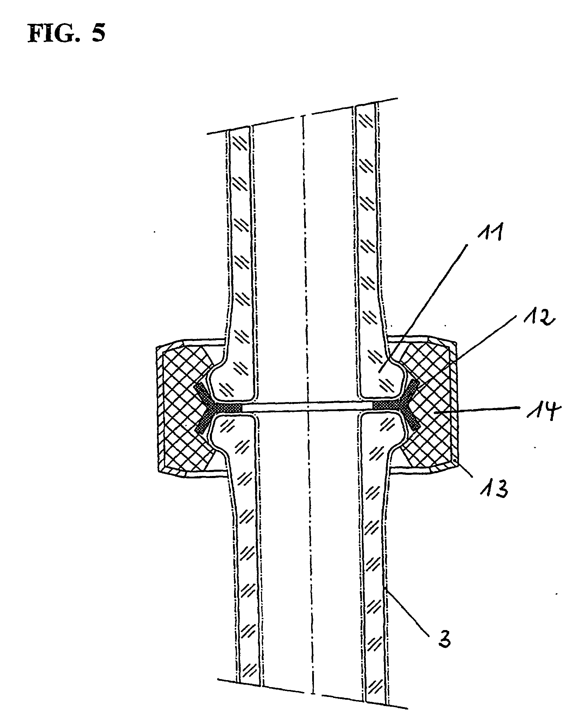

In Figur 5 wird die Verbindung von Glasbauteilen mit Bördelflansch 11 gezeigt. Dabei wird zur Herstellung einer ableitfähigen Verbindung eine ableitfähige Dichtung 12, vorzugsweise wiederum aus ableitfähigem PTFE-Graphit, eingesetzt. Vorzugsweise ist auch das Elastomer 14, das unter der Edelstahlschelle 13 liegt, aus einem ableitfähigem Material hergestellt. Der Kontakt zwischen der Dichtung 12 und den Glasoberflächen wird durch das Anziehen einer außen liegenden Edelstahlschelle 13 hergestellt, wobei sowohl axiale als auch radiale Kräfte erzeugt werden, die die ableitfähige Dichtung 12 auf die Stirnflächen und den äußeren Bund des Bördelflanschs mit der elektrisch ableitfähigen Beschichtung 3 andrücken, wodurch die beiden Glasbauteile ableitfähig miteinander verbunden werden.

Da die Ableitfähigkeit eine Eigenschaft der Oberflächen der Glasbauteile selbst ist, sind bei Verwendung der erfindungsgemäß überzogenen Gläsbauteile zur Herstellung von Anlagen, Apparaturen und Rohrleitungen die sonst für Glasbauteile mit Schutzüberzügen aus nicht ableitfähigen Materialien erforderlichen Schutzmaßnahmen nicht mehr nötig.

## Patentansprüche

1. Glasbauteile (1) für den Apparate- und Anlagenbau und für den Rohrleitungsbau mit einem Schutzüberzug (4) zur Verbesserung ihrer mechanischen Eigenschaften, der aus einem nichtleitenden Überzugsmaterial in Form von Polyurethanbeschichtungen oder mit Polyesterharz getränkten Glasfasermatten hergestellt ist, **dadurch gekennzeichnet, dass** die Oberflächen der Glasbauteile (1) zur Verminderung ihres Oberflächenwiderstands ganz oder teilweise mit einem weiteren Überzug (3,3') aus einem transparenten ableitfähigen organischen Polymer versehen sind, der über dem ersten Schutzüberzug (4) angeordnet ist.

2. Glasbauteile nach Anspruch 1, **dadurch gekennzeichnet, daß** der weitere Überzug (3,3') aus Polyethylendioxythiophen/Polystyrolsulfonat besteht.

3. Verwendung der Glasbauteile nach einem der Ansprüche 1 oder 2 zur Herstellung von Glasapparaten und Glasanlagen und von Rohrleitungen, wobei die Glasbauteile (1) so zu einer Apparatur oder Anlage oder Rohrleitung zusammengebaut werden, daß die einzelnen Glasbauteile an ihren Verbindungsstellen ableitfähig miteinander verbunden sind.

4. Verwendung nach Anspruch 3, **dadurch gekennzeichnet, daß** die Glasbauteile zu ihrer Verbindung mit Flanschen (2,11) versehen sind und an den Verbindungsstellen ableitfähige Dichtungen (5,12) und/oder Einlagen (6) und/oder Überbrückungen (10) und/oder Flansch- oder Schellenringe (7,13,14) aufweisen.

5. Glasapparate und Glasanlagen und Rohrleitungen, die aus Glasbauteilen nach einem der Ansprüche 1 oder 2 hergestellt sind, bei denen die einzelnen Glasbauteile (1) an ihren Verbindungsstellen ableitfähig miteinander verbunden sind.

6. Glasapparate und Glasanlagen und Rohrleitungen nach Anspruch 5, **dadurch gekennzeichnet, daß** die Glasbauteile (1) zu ihrer Verbindung untereinander oder zu Bauteilen aus anderen Materialien mit Flanschen (2,11) versehen sind und an den Verbindungsstellen ableitfähige Dichtungen (5,12) und/oder ableitfähige Einlagen (6) und/oder ableitfähige Überbrückungen (10) und/oder ableitfähige Flansch- oder Schellenringe (7,13,14) aufweisen.

## Claims

1. Glass modules (1) for the construction of equipment and installations and for pipe works comprising a protective coating (4) for improving their mechanical properties made from a non-conductive coating material in the form of polyurethane coatings or glass fiber mats impregnated with polyester resin, **characterized in that** the surfaces of the glass modules (1) are entirely or partially coated with a further coating (3,3') of a transparent organic polymer able to conductively eliminate charges, which is provided over said first protective coating (4).

2. Glass modules according to claim 1, **characterized in that** the further coating (3,3') consists of polyethylenedioxythiophene/polystyrene sulfonate.

3. Use of glass modules according to one of claims 1 or 2 for the manufacture of glass equipment and glass installations and pipe works, wherein the glass modules (1) are assembled into an equipment or installation or pipe works in such a manner that the single glass modules at their points of juncture are conductively joined with each other.

4. Use according to claim 3, **characterized in that** the glass modules are provided with flanges (2, 11) for assembling them together and that at the points of juncture conductive seals (5, 12) and/or inserts (6) and/or bridging elements (10) and/or flange or clamp rings (7, 13, 14) are provided.

5. Glass equipment and glass installations and pipe works assembled from glass modules according to one of claims 1 or 2, wherein the single glass modules (1) are conductively joined one to one another at their points of juncture.

6. Glass equipment and glass installations and pipe works. according to claim 7, **characterized in that** the glass modules (1) are provided with flanges (2, 11) for assembling with each other or with components made from other materials, and at the points of juncture comprise conductive seals (5, 12) and/or conductive bridging elements (10) and/or conductive flange or clamp rings (7,13,14).

## Revendications

1. Composants en verre (1) pour la construction d'installations et d'appareils et pour la construction de conduites tubulaires, comportant un revêtement de protection (4) pour améliorer leurs propriétés mécaniques, lequel est fabriqué à partir d'un matériau de revêtement non conducteur sous la forme de revêtements de polyuréthane ou de nappes en fibres de verre imbibées de résine de polyester, **caractérisés en ce que**, pour réduire leur résistance superficielle, les surfaces des composants en verre (1) sont munies complètement ou partiellement d'un autre revêtement (3, 3') constitué d'un polymère organique transparent à capacité de décharge qui est agencé sur le premier revêtement de protection (4).

2. Composants en verre selon la revendication 1, **caractérisés en ce que** l'autre revêtement (3, 3') se compose de dioxythiophène de polyéthylène/de sulfonate de polystyrène.

3. Utilisation de composants en verre selon l'une ou l'autre des revendications 1 et 2 pour la fabrication d'appareils en verre et d'installations en verre et de conduites tubulaires, dans laquelle les composants en verre (1) sont assemblés en un appareillage ou une installation ou une conduite tubulaire de sorte que les composants en verre individuels sont reliés entre eux en leurs points de liaison avec capacité de décharge.

4. Utilisation selon la revendication 3, **caractérisée en ce que** les composants en verre sont munis de brides (2, 11) pour leur liaison et présentent sur les emplacements de liaison des joints (5, 12) et/ou des garnitures (6) et/ou des pontages (10) et/ou des anneaux de bride ou de collier (7, 13, 14) avec capacité de décharge.

5. Appareils en verre et installations en verre et conduites tubulaires qui sont fabriqué(e)s à partir de composants en verre selon l'une ou l'autre des revendications 1 et 2, dans lesquels (lesquelles) les composants en verre individuels (1) sont reliés entre eux en leurs points de liaison avec capacité de décharge.

6. Appareils en verre et installations en verre et conduites tubulaires selon la revendication 5, **caractérisé(e)s** en ce que les composants en verre (1) sont munis de brides (2, 11) pour leur liaison entre eux, ou à d'autres éléments de construction constitués d'autres matériaux et présentent sur les emplacements de liaison des joints (5, 12) et/ou des garnitures (6) et/ou des pontages (10) et/ou des anneaux de bride ou de collier (7, 13, 14) avec capacité de décharge.
